# EUROPEAN PATENT APPLICATION

(11) **EP 3 772 032 A1**
(43) Date of publication of application: **03.02.2021**
(21) Application number: 19189458.3
(22) Date of filing: 31.07.2019
(51) Int. Cl.: G06Q 20/40, G06Q 20/00, G06Q 40/02

(54) **UNIFIED ACCOUNTING CODE**

(71) Applicant: Lisciani, Lorenzo, 67100 L'Aquila (IT)
(72) Inventor: Lisciani, Lorenzo, 67100 L'Aquila (IT)

(57) **Abstract**

**Problem**

The BBAN (Account Number) is the identifier used by financial institutions in individual countries as part of a National Account Numbering Scheme which uniquely identifies an account of a customer at a financial institution. Currently each basic bank account number (BBAN) is coded by the national central bank or designated payment authority of each country. There is no consistency between the formats adopted.

**Solution**

The idea is to get a unified bank account coding where each account has the account holder clearly identified into it

## Description

### Technical Field

Security and wire transfer, G06Q20/108 remote and home banking.

### Background Art

The BBAN (Account Number) is the identifier used by financial institutions in individual countries as part of a National Account Numbering Scheme which uniquely identifies an account of a customer at a financial institution. [ECBS source, IBAN 2003]. Currently each basic bank account number (BBAN) is coded by the national central bank or designated payment authority of each country. There is no consistency between the formats adopted. The BBAN must be of a fixed length for the Country and comprise case-insensitive alphanumeric characters. It includes the domestic bank account number, branch identifier, and potential routing information. Each Country can have a different national routing/account numbering system, up to a maximum of 30 alphanumeric characters. [Wikipedia source, IBAN reference]

### Summary of invention

The idea is to get a unified bank account coding where each account has the account holder clearly identified into it.

### Technical Problem

National financial transfers are regulated by several type of protocols based on the Country, or group of Countries, which are linked through common agreement to make such kind of transaction where the transfer is made. In Canada is used the Routing Number, in Australia the Bank State Branch, in USA the ABA routing transit number (ABT RTN) and so on. International bank transactions generally use an IBAN (typically within EU) or the ISO 9362 Business Identifier Code system (BIC) which is also known as SWIFT code. The national authority may register its BBAN format with SWIFT, but there is not obligation. It may adopt IBAN without registration. SWIFT also acts as the registration authority for the SWIFT system, which is used by most Countries which have not adopted IBAN. [Wikipedia source, IBAN reference].

There is no harmonization between national authorities and this help the person and entities who want vanish without a trace.

### Solution to Problem

The idea is to get a unified bank account coding where each account has the account holder clearly identified into (ID).

Each Country could own the data base of their home country accounts: it doesn't require a worldwide centre to managed it.

When making a wire transfer, the bank will check the database if both accounts are into the system and then will proceed with the execution.

To avoid the creation of multiple ID with the same person (or entity in case of companies) from the banks located in the so-called fiscal heavens (to hide the account's holder identity), the receiving bank could ask supporting document (namely the passport). This to verify that the account's holder doesn't have already an existing ID registered into the system.

### Advantageous effect of invention

This coding system will allow Country tax departments to track any accounts even out of home-Country by simply making the research using the account's holder ID.

At the same way, the banks located in the so-called "fiscal heavens" shall align themselves to this new coding system to get the possibility to transfer money outside; meaning that they shall create a (Tax) Identification Number for each account's holder.

### Description of embodiments

There are just few rules to structure the unified bank account number.

Main Rules: each account shall be structures in 3 main bodies:
1. 1^{st} body: a body which refers to the bank branch location (Country) where the account is open and the bank name. It could be followed what is already existing such as the first section of the IBAN and/or SWIFT number. Or it could be generated a new coding of some digits including Country and (optionally) Bank code (example: USA for USA, ITA for Italy, GER for Germany, etc and CHA for Chase bank, BOA for Bank of America, etc). In such way the 1^{st} body will direct to a specific Country's database. In case the bank account will be opened via internet, the reference Country will be the bank website registration Country (example: www.XXXX.it will be Italy, etc.).
2. 2^{nd} body: Account's holder Identification Number (ID). The ID shall be unique for each person/entity and cannot refer to more persons/entities. It might be created a new identification system but at the same time each Countries has already a unique identification system which is provided by the Tax Identification Number (TIN). So, like for the 1^{st} body, it could be recovered an existing coding system (the Tax number coding system). Being the 1^{st} body already referring to a specific Country, it is not required that each Country will use a common coding system to identify the ID. Because the ID length might differ by each Country, to unify the 2^{nd} body, it can be taken the Country which the longest ID number (for example: considering the ID as the tax number then the reference might be the ID from China). The Country with less digits simply covers the difference by adding an X (or 0) for each missing digit to complete the 2^{nd} body (or whatever letter or number they prefer to put).
3. 3^{rd} body: a progressive number, typically alpha-numeric, plus a digit. Two or more accounts with the same ID (2^{nd} body) cannot have the same alpha-numeric number. For example: one holder has 3 accounts: 2 in Italy and 1 in Germany. Then if the first account has the 3^{rd} body with 001, then the second account cannot have this number even if it is in a Germany account. The third one cannot be the same of the previous two. The last digit might be "S" or "J" or nil. "S" stands for Sub, meaning that the reference account is linked to another account. This apply in case there are some specific situations where it is required more details to track the account's holder. "J" stands for Joint meaning that it is a joint bank account number. Please refer to the points below for more explanations.

### Other rules:

a. Who is changing fiscal residence or holding multiple citizenships, might got more ID being issued by each Country of citizenship. To avoid this event, it shall always be kept the same first-used 2^{nd} body (ID), for example: the ID used to open the first bank account shall be always the reference ID. In case in some specific Country is not possible to keep the original ID, then there shall be a reference to the first ID to keep traceability. It means that the account will have on the 3^{rd} body a final digit with "S".
b. For Company or Entrepreneur, applying the same principle of the 2^{nd} body structure explained above, it might be used as reference ID the VAT registration number which is used in EU countries. In USA it could be used as reference ID the already existing EIN (Employer Identification Number) which is a 9-digits number assigned to a business by the IRS (Internal Revenue Service) or the Social Security Number (it depends on the exception granted by IRS). In case of Entrepreneur or Company with limited owners' number or with stockholders with a relevant percentage of shares, the 2^{nd} body shall have a sub-body with the reference tax numbers of the major stockholders. So, the indicated account will have on the 3^{rd} body the "S" as final digit.
c. 3^{rd} body: in case of changing banks, the 3^{rd} body of the account could be closed or could be transferred to the new one. It is not mandatory to start from 001 or the number shall be consecutive to the previous one (even if suggested). Once it is decided to close one alpha-numeric number, it cannot be opened again.
d. In case of change of citizenship, the account's holder might decide to update his 2^{nd} body. In such case all his accounts will be update accordingly.
e. In case of joint bank account with two or multiple holders, the 3^{rd} body will have a "J" at the end; the 2^{nd} body will have the ID of one of the accounts' holders only. There will be a reference to the others account's holders ID.

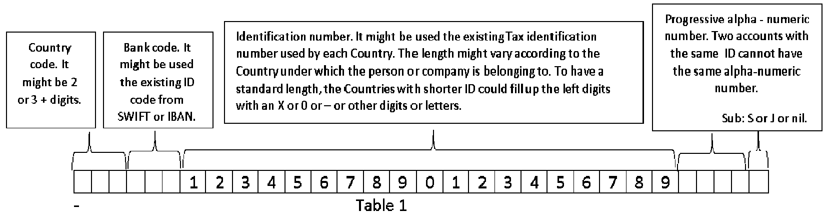

### Example

As example, if I would like to open a bank account at BNP Paribas in Italy, my account number would be (using the TIN as structure of the 2^{nd} body. Here the TIN is just an example):
IT - BNP - LSCLNZ77S99A123BXXX - 0001

A second account at HSBC bank in UK would be:
UK - HSB - LSCLNZ77S99A123BXXX - 0002

If I decide to move my Italian account from BNP Paribas to Unicredit, I might decide to keep the numbering of the 3^{rd} body, meaning that it would become:
IT - BNP - LSCLNZ77S99A123BXXX - 0001 → IT - UNI - LSCLNZ77S99A123BXXX - 0001

When dealing with join bank account only one ID will be shown on the 2^{nd} body. The other will be track on the account Sub-section.
IT - UNI - LSCLNZ77S99A123BXXX - 0003 - J
Sub: ID of the 2^{nd} account holder (and 3^{rd} or more in case of multiple joint account).

When dealing with Enterprise bank account, the final digit will have an S in case there is a major stakeholder.
US - CHA - XXXXXXXXX XXXXXXXXX - 0001 - S
Sub: ID of the major stakeholder/s.

**Industrial applicability**

**Reference signs list**

**Citation list**

Non-patent literature

## Claims

1. The novelty of this patent is based on: Personnel Account Identification Number applied to bank account coding, numbering or structure.

2. The account number clearly refers to a specific account's holder and one section (the 2^{nd} body) is always the same regardless the bank or the Country where the account is open.

3. Progressive alpha-numeric number as described in the Rule 3 which uniquely identify a personnel account and which could be transferred from one bank to another (like a portable mobile number).

4. All the points above used separately and/or together, partially or fully, become part of a claim.
